# EUROPÄISCHE PATENTANMELDUNG

(11) **EP 1 471 237 A2**
(43) Veröffentlichungstag der Anmeldung: **27.10.2004**
(21) Anmeldenummer: 03029000.1
(22) Anmeldetag: 17.12.2003
(51) Int. Cl.: F02D 41/14, F02D 41/02

(54) **Betriebsverfahren für eine Brennkraftmaschine mit einem Vorkatalysator und einem Speicherkatalysator**

(30) Priorität: 22.04.2003 DE 10318210
(71) Anmelder: Siemens Aktiengesellschaft, 80333 München (DE); DaimlerChrysler AG, 70546 Stuttgart (DE)
(72) Erfinder: Franz, Jens, 70327 Stuttgart (DE); Hofmann, Uwe, 64385 Reichelsheim (DE); Renz, Volker, Dr., 93047 Regensburg (DE); Schwarz, Roland, Dr., 93173 Wenzenbach (DE)
(74) Vertreter: Berg, Peter, Dipl.-Ing.

(57) **Zusammenfassung**

Die Erfindung betrifft ein Betriebsverfahren für eine Brennkraftmaschine (1) mit einem Vorkatalysator (2) und einem Speicherkatalysator (3), wobei die Gemischzusammensetzung der Brennkraftmaschine (1) während einer unterstöchiometrischen Betriebsphase (T_{FETT}) angefettet wird, um den Speicherkatalysator (3) dadurch zu regenerieren. Es wird vorgeschlagen, dass die Gemischzusammensetzung der Brennkraftmaschine vor der unterstöchiometrischen Betriebsphase (T_{FETT}) während einer überstöchiometrischen Betriebsphase (T_{MAGER}) abgemagert wird.

## Beschreibung

Die Erfindung betrifft ein Betriebsverfahren für eine Brennkraftmaschine mit einem Vorkatalysator und einem Speicherkatalysator gemäß dem Oberbegriff des Anspruchs 1.

Moderne Brennkraftmaschinen weisen zur Abgasreinigung einen geregelten Dreiwegekatalysator und einen NOₓ-Speicherkatalysator auf. Der Dreiwegekatalysator wird auch als TWC-Katalysator (engl. TWC - Three-Way-Catalyst) bezeichnet und dient als Vorkatalysator zur Reduktion von Kohlenmonoxid und Kohlenwasserstoffen im Abgas. Der NOₓ-Speicherkatalysator ist dagegen stromabwärts dem TWC-Katalysator angeordnet und hat im überstöchiometrischen Betrieb die Aufgabe, Stickoxide aus dem Abgas aufzunehmen und zwischenzuspeichern.

Das Speichervermögen des NOₓ-Speicherkatalysators ist jedoch begrenzt, so dass der NOₓ-Speicherkatalysator rechtzeitig vor der Erschöpfung seines Speichervermögens regeneriert werden muss, um einen Durchschlag des NOₓ-Speicherkatalysators zu verhindern, da dies zu einem Anstieg der NOₓ-Emmissionen führen würde.

Die Regeneration des NOₓ-Speicherkatalysators kann bekanntermaßen durch eine vorübergehende Anfettung der Gemischzusammensetzung der Brennkraftmaschine erfolgen, so dass die gespeicherten Stickoxide in weniger umweltschädliche Verbindungen umgewandelt werden.

Problematisch an derartigen Abgasreinigungsanlagen mit einem NOₓ-Speicherkatalysator ist die Tatsache, dass der NOₓ-Speicherkatalysator durch den in handelsüblichen Kraftstoffen heute noch enthaltenen Schwefel vergiftet wird, wodurch das NOₓ-Speichervermögen mit zunehmender Betriebsdauer nachlässt.

So entstehen bei der Verbrennung von schwefelhaltigem Kraftstoff insbesondere im Magerbetrieb Schwefeloxide, die in dem NOₓ-Speicherkatalysator wie Stickoxide an der katalytisch aktiven Oberfläche gebunden und eingespeichert werden. Die auf diese Weise in dem NOₓ-Speicherkatalysator eingespeicherten Schwefeloxide sind jedoch chemisch wesentlich stabiler als die NOₓ-Verbindungen, so dass die eingespeicherten Schwefeloxide bei der üblichen Regeneration des NOₓ-Speicherkatalysators nicht aus dem NOₓ-Speicherkatalysator entfernt werden. Durch die während der Betriebsdauer zunehmende Einlagerung von Schwefeloxiden in dem NOₓ-Speicherkatalysator verringert sich also ständig das absolute NOₓ-Speichervermögen des NOₓ-Speicherkatalysators.

Die schwefelbedingte Vergiftung des NOₓ-Speicherkatalysators und die damit verbundene Abnahme des absoluten NOₓ-Speichervermögens kann jedoch rückgängig gemacht werden, indem der NOₓ-Speicherkatalysator auf die sogenannte Desulfatisierungstemperatur erhitzt und im unterstöchiometrischen Bereich betrieben wird, welche über der normalen Betriebstemperatur liegt und beispielsweise bei einem NOₓ-Speicherkatalysator in Bariumtechnologie bei ca. 650° Celsius bis 750° Celsius liegt. Die zur Desulfatisierung des NOₓ-Speicherkatalysators erforderliche Anhebung der Abgastemperatur kann beispielsweise durch eine Verstellung des Zündzeitpunktes in Richtung spät erfolgen.

Nachteilig an diesem Verfahren zur Desulfatisierung des NOₓ-Speicherkatalysators ist die Tatsache, dass beim Erreichen der Desulfatisierungstemperatur in dem NOₓ-Speicherkatalysator die Gefahr besteht, dass die maximal zulässige Betriebstemperatur des Vorkatalysators überschritten wird, da üblicherweise ein Temperaturgefälle zwischen dem Vorkatalysator und dem nachgeordneten NOₓ-Speicherkatalysators besteht.

Ein weiterer Nachteil an dem vorstehend beschriebenen bekannten Verfahren zur Desulfatisierung des NOₓ-Speicherkatalysators besteht darin, dass durch die Spätverstellung des Zündzeitpunktes nur eine begrenzte Erhöhung der Abgastemperatur erreicht werden kann, so dass die Desulfatisierung des NOₓ-Speicherkatalysators meist nur im oberen Teillastbereich der Brennkraftmaschine erfolgen kann.

Schließlich führt das vorstehend beschriebene Verfahren zur Desulfatisierung des NOₓ-Speicherkatalysators zu einem stark erhöhten Kraftstoffverbrauch.

Der Erfindung liegt somit die Aufgabe zugrunde, ein Betriebsverfahren für eine Brennkraftmaschine mit einem Vorkatalysator und einem Speicherkatalysator anzugeben, das eine Desulfatisierung des Speicherkatalysators ermöglicht, ohne den Vorkatalysator zu beschädigen, wobei die Desulfatisierung mit möglichst geringem zusätzlichen Kraftstoffverbrauch auch im unteren Teillastbereich der Brennkraftmaschine möglich sein soll.

Diese Aufgabe wird, ausgehend von dem vorstehend beschriebenen Verfahren zur Desulfatisierung eines NOₓ-Speicherkatalysators gemäß dem Oberbegriff des Anspruchs 1, durch die kennzeichnenden Merkmale des Anspruchs 1 gelöst.

Die Erfindung beruht auf der physikalischen Erkenntnis, dass in einem Katalysator beim Übergang vom unterstöchiometrischen Betrieb (Fettbetrieb) zum überstöchiometrischen Betrieb (Magerbetrieb) zunächst eine exotherme Reaktion erfolgt, da der in dem Katalysator während des vorangegangenen unterstöchiometrischen Betriebs gespeicherte Kraftstoff mit dem Luftüberschuss während des überstöchiometrischen Betriebs reagiert. Diese exotherme Reaktion führt zu einer Aufheizung des Katalysators, was sowohl für den Vorkatalysator als auch für den Speicherkatalysator gilt.

Die exotherme Reaktion beim Übergang vom unterstöchiometrischen Betrieb zum überstöchiometrischen Betrieb hält jedoch nur solange an, bis das Speichervermögen des Katalysators erschöpft und der zuvor eingespeicherte Kraftstoff verbrannt ist. Dieser Zeitpunkt lässt sich daran erkennen, dass der Sauerstoffüberschuss am Eingang des Katalysators auf den Ausgang des Katalysators durchschlägt.

Falls der überstöchiometrische Betrieb über diesen Zeitpunkt hinaus fortgesetzt wird, so führt dies zur Einspeicherung von Sauerstoff in dem Katalysator, wobei der Katalysator jedoch nicht weiter aufgeheizt wird.

Beim anschließenden Übergang vom überstöchiometrischen Betrieb (Magerbetrieb) zum unterstöchiometrischen Betrieb (Fettbetrieb) des Katalysators findet dann ebenfalls zunächst eine exotherme Reaktion statt, wobei der zuvor eingespeicherte Sauerstoff mit dem Kraftstoffüberschuss während des unterstöchiometrischen Betriebs reagiert.

Auch diese exotherme Reaktion hält jedoch nur solange an, bis das Speichervermögen des Katalysators erschöpft und der zuvor eingespeicherte Sauerstoff verbrannt ist. Dieser Zeitpunkt lässt sich daran erkennen, dass der Kraftstoffüberschuss am Eingang des Katalysators auf den Ausgang des Katalysators durchschlägt.

Falls der unterstöchiometrische Betrieb über diesen Zeitpunkt hinaus fortgesetzt wird, so führt dies zur Einspeicherung von Kraftstoff in dem Katalysator, wobei der Katalysator jedoch nicht weiter aufgeheizt wird.

Die Erfindung sieht nun vor, dass die Brennkraftmaschine zur Desulfatisierung des Speicherkatalysators abwechselnd im überstöchiometrischen Betrieb und im unterstöchiometrischen Betrieb arbeitet.

Bei jedem Übergang zwischen einer unterstöchiometrischen Betriebsphase und einer überstöchiometrischen Betriebsphase wird der Vorkatalysator zwar zunächst aufgeheizt, bis das Speichervermögen des Vorkatalysators erschöpft ist.

Nach der Erschöpfung seines Speichervermögens wird der Vorkatalysator dann jedoch nicht weiter aufheizt, so dass der verbleibende Zeitraum der über- bzw. unterstöchiometrischen Betriebsphase als Kühlphase für den Vorkatalysator bezeichnet werden kann.

Der nachgeordnete Speicherkatalysator weist dagegen vorzugsweise ein Speichervermögen auf, das weder während der unterstöchiometrischen Betriebsphase noch während der überstöchiometrischen Betriebsphase erschöpft wird. Dies bedeutet, dass der Speicherkatalysator sowohl während überstöchiometrischen Betriebs als auch während der unterstöchiometrischen Betriebsphase dauerhaft und ohne Unterbrechung erhitzt wird.

Im Ergebnis führt der dauernde Wechsel zwischen unter- und überstöchiometrischem Betrieb also zu einer unterbrechungsfreien Aufheizung des Speicherkatalysators, während der Vorkatalysator nur beim jedem Übergang zwischen über- und unterstöchiometrischem Betrieb kurzfristig aufgeheizt wird und ansonsten wieder abkühlen kann. Auf diese Weise wird vorteilhaft eine starke Erhitzung des Speicherkatalysators ermöglicht, ohne dass der Vorkatalysator überhitzt wird.

Die unterstöchiometrische Betriebsphase und die überstöchiometrische Betriebsphase sollte jeweils solange fortgesetzt werden, dass das absolute Sauerstoffspeichervermögen des Vorkatalysators überschritten wird und somit ein sogenannter Sauerstoffdurchschlag erfolgt. Dies ist sinnvoll, da der gewünschte Kühleffekt bzw. das Ende der Aufheizung erst nach einem Sauerstoffdurchschlag des Vorkatalysators auftritt.

Im Rahmen des erfindungsgemäßen Verfahrens wird deshalb vorzugsweise die Sauerstoffkonzentration im Abgas der Brennkraftmaschine gemessen, um einen Sauerstoffdurchschlag des Vorkatalysators zu erkennen, wobei der Übergang von der überstöchiometrischen Betriebsphase (Magerphase) zu der unterstöchiometrischen Betriebsphase (Anfettungsphase) oder umgekehrt frühestens nach einem Sauerstoffdurchschlag des Vorkatalysators erfolgt.

Die Messung der Sauerstoffkonzentration im Abgas der Brennkraftmaschine erfolgt hierbei vorzugsweise durch eine Abgassonde, die zwischen dem Vorkatalysator und dem Speicherkatalysator angeordnet ist, so dass ein Sauerstoffdurchschlag des Vorkatalysators an einem plötzlichen Anstieg der gemessenen Sauerstoffkonzentration im Abgas zwischen dem Vorkatalysator und dem Speicherkatalysator erkannt werden kann.

Es ist jedoch alternativ auch möglich, dass zur Erkennung eines Sauerstoffdurchschlags des Vorkatalysators die Sauerstoffkonzentration durch eine Abgassonde vor dem Vorkatalysator gemessen wird. Aus der vor dem Vorkatalysator gemessenen Sauerstoffkonzentration im Abgas der Brennkraftmaschine kann dann der Sauerstofffüllungsgrad des Vorkatalysators abgeleitet werden, um einen Sauerstoffdurchschlag des Vorkatalysators zu erkennen.

In den bevorzugten Ausführungsbeispielen des erfindungsgemäßen Verfahrens wird die überstöchiometrische bzw. unterstöchiometrische Betriebsphase nach einem Durchschlag des Vorkatalysators noch für eine vorgegebene Kühlphase fortgesetzt, um den Vorkatalysator zu kühlen und dadurch eine Beschädigung des Vorkatalysators durch die folgende exotherme Reaktion zu verhindern.

Die Dauer der zum Schutz des Vorkatalysators erforderlichen Kühlphase wird hierbei vorzugsweise in Abhängigkeit von dem Betriebspunkt der Brennkraftmaschine festgelegt und kann beispielsweise aus einem Kennfeld ausgelesen werden. Bei der Festlegung der Dauer der Kühlphase können verschiedene Sensorsignale ausgewertet werden, die der elektronischen Motorsteuerung (engl. ECU - Electronic Control Unit) zur Verfügung stehen.

In einer vorteilhaften Variante der Erfindung wird die Sauerstoffkonzentration im Abgas der Brennkraftmaschine stromabwärts nach dem Speicherkatalysator gemessen, um auch einen Durchschlag des Speicherkatalysators zu erkennen, wobei die unterstöchiometrische Betriebsphase und/oder die überstöchiometrische Betriebsphase bei einem Durchschlag des Speicherkatalysators beendet wird. Ein derartiger Abbruch des unterstöchiometrischen bzw. überstöchiometrischen Betriebs ist sinnvoll, um einen Kühleffekt nach einem Durchschlag zu verhindern. In dieser Variante bildet der Durchschlag des Speicherkatalysators also ein zusätzliches Abbruchkriterium zur Beendigung der überstöchiometrischen bzw. unterstöchiometrischen Betriebsphase, wobei dieses Abbruchkriterium vorzugsweise mit den sonstigen Abbruchkriterien (z.B. Ablauf der Heizphase bzw. Ablauf der Kühlphase) ODER-verknüpft wird.

Es versteht sich ferner von selbst, dass die Temperatur des Speicherkatalysators während der unterstöchiometrischen Betriebsweise vorzugsweise mindestens bis auf die Desulfatisierungstemperatur des Speicherkatalysators angehoben wird.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine stark vereinfachte schematische Darstellung einer Brennkraftmaschine mit einer Abgasreinigungsanlage,
- Figur 2a: ein Zeitdiagramm mit dem Verlauf des Luftverhältnisses λ am Eingang des Vorkatalysators,
- Figur 2b: ein Zeitdiagramm mit dem Verlauf des Luftverhältnisses λ zwischen dem Vorkatalysator und dem Speicherkatalysator sowie
- Figuren 3a und 3b: das erfindungsgemäße Verfahren als Flussdiagramm

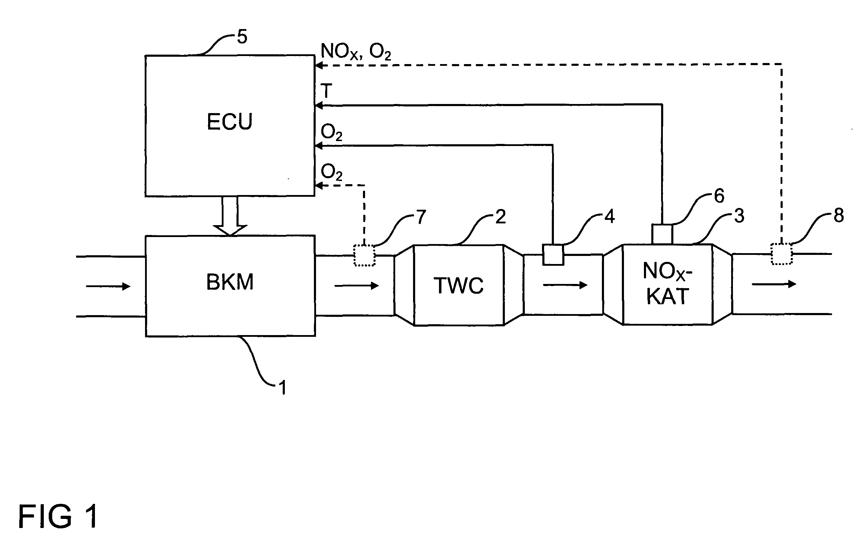

Die schematische Darstellung in Figur 1 zeigt in stark vereinfachter Form eine Brennkraftmaschine 1 mit einer Abgasreinigungsanlage, wobei die Abgasreinigungsanlage einen Dreiwegekatalysator (engl. TWC - Three-Way-Catalyst) sowie einen stromabwärts dem Dreiwegekatalysator 2 angeordneten NOₓ-Speicherkatalysator 3 umfasst.

Der Dreiwegekatalysator 2 dient hierbei zur Reduzierung der Kohlenwasserstoff- und Kohlenmonoxidkonzentration im Abgas, während der NOₓ-Speicherkatalysator 3 die Aufgabe hat, Stickoxide aus dem Abgas aufzunehmen und zwischenzuspeichern.

Darüber hinaus weist die Abgasreinigungsanlage eine Abgassonde 4 auf, die zwischen dem Dreiwegekatalysator 2 und dem NOₓ-Speicherkatalysator 3 angeordnet ist und die Sauerstoffkonzentration im Abgas misst. Ausgangsseitig ist die Abgassonde 4 mit einer elektronischen Motorsteuerung 5 (engl. ECU - Electronic Control Unit) verbunden, welche die Brennkraftmaschine 1 steuert bzw. die Gemischzusammensetzung der Brennkraftmaschine 1 vorgibt.

Ferner weist die Abgasreinigungsanlage einen Temperatursensor 6 auf, der an dem NOₓ-Speicherkatalysator 3 angebracht ist und mittelbar die Temperatur des NOₓ-Speicherkatalysators 3 erfasst, wobei der Temperatursensor 6 ausgangsseitig ebenfalls mit der elektronischen Motorsteuerung 5 verbunden ist. Die Messung der Temperatur des NOₓ-Speicherkatalysators 3 ist erforderlich, da der NOₓ-Speicherkatalysator 3 zur Schwefelentgiftung in regelmäßigen Abständen aufgeheizt werden muss, wobei zum Abbau der eingespeicherten Schwefelverbindungen eine bestimmte Mindesttemperatur erreicht werden muss, was somit von der elektronischen Motorsteuerung 5 kontrolliert werden kann.

In einer Variante der Erfindung weist die Abgasreinigungsanlage eine Abgassonde 7 auf, die in einem Abgaskanal zwischen der Brennkraftmaschine 1 und dem Dreiwegekatalysator 2 angeordnet ist und die Sauerstoffkonzentration im Abgas der Brennkraftmaschine 1 stromaufwärts des Dreiwegekatalysators 2 misst. Aus der so gemessenen Sauerstoffkonzentration kann die elektronische Motorsteuerung 5 dann ermitteln, ob das Sauerstoffspeichervermögen des Dreiwegekatalysators 2 ausgeschöpft ist, wie noch detailliert beschrieben wird.

In einer weiteren Variante der Erfindung ist zusätzlich stromabwärts des NOₓ-Speicherkatalysators 3 eine weitere Abgassonde 8 angeordnet, welche die Abgaszusammensetzung stromabwärts des NOₓ-Speicherkatalysators 3 misst, um einen Durchschlag des NOₓ-Speicherkatalysators 3 erkennen zu können. Ein derartiger Durchschlag des NOₓ-Speicherkatalysators 3 tritt dann auf, wenn das absolute Speichervermögen des NOₓ-Speicherkatalysators 3 überschritten ist und die im Abgas der Brennkraftmaschine 1 enthaltenen Stickoxide somit nicht mehr in den NOₓ-Speicherkatalysator eingespeichert werden können.

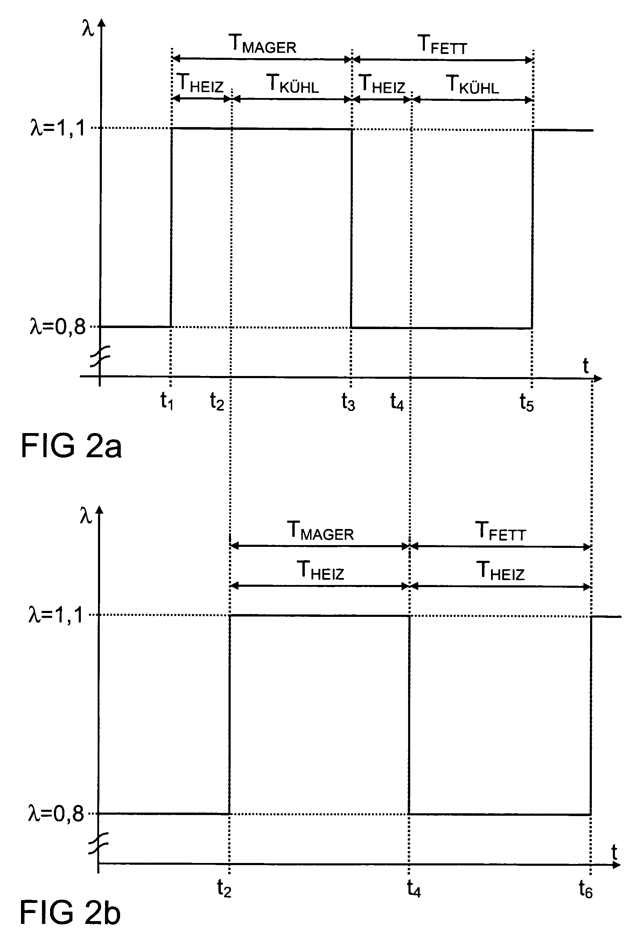

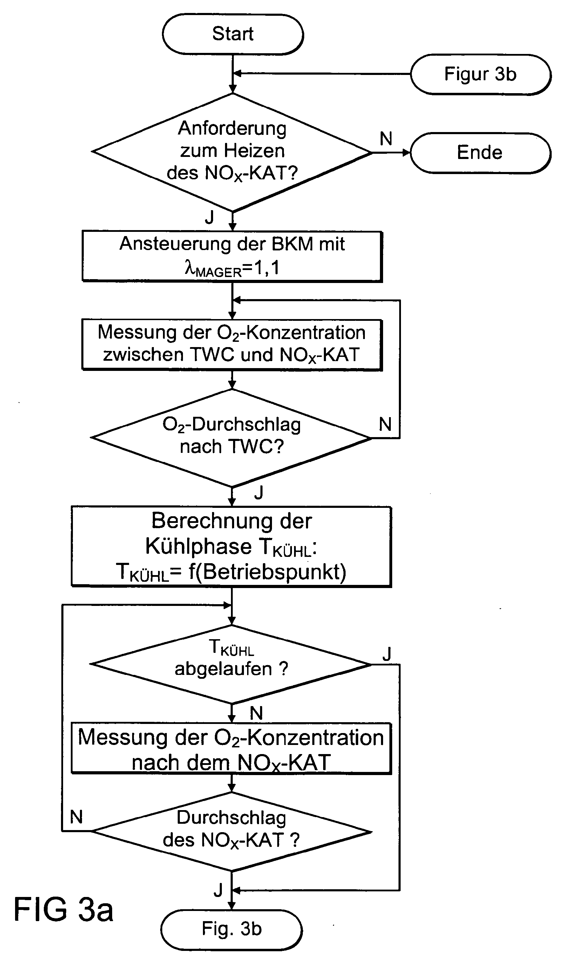

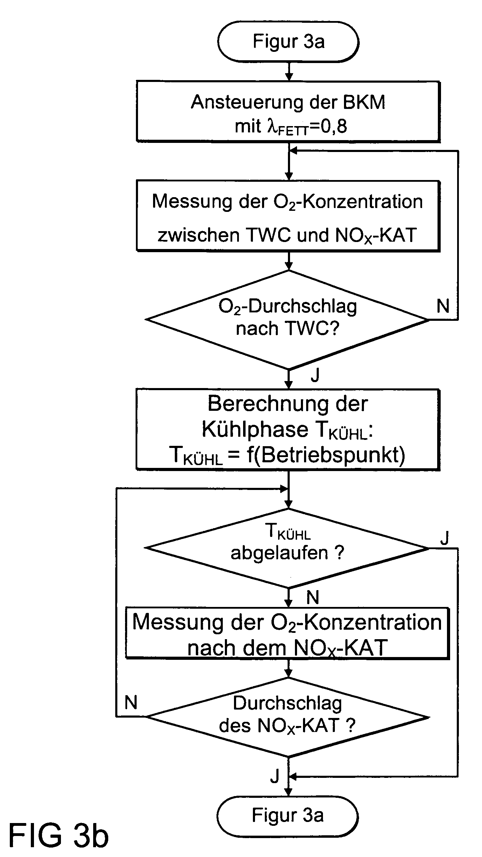

Im folgenden wird nun anhand des in den Figuren 3a und 3b dargestellten Flussdiagramms das erfindungsgemäße Verfahren zur Desulfatisierung des NOₓ-Speicherkatalysators 3 beschrieben, wobei auf die Zeitdiagramme in den Figuren 2a und 2b Bezug genommen wird.

Hierbei zeigt Figur 2a den zeitlichen Verlauf des Luftverhältnisses λ am Eingang des Dreiwegekatalysators 2, wohingegen Figur 2b den zeitlichen Verlauf des Luftverhältnisses λ zwischen dem Dreiwegekatalysator 2 und dem NOₓ-Speicherkatalysator 3 für den gleichen Zeitraum wiedergibt.

Zu Beginn des Verfahrens wird zunächst geprüft, ob eine Anforderung zum Heizen des NOₓ-Speicherkatalysators 3 vorliegt, wobei eine derartige Anforderung von der elektronischen Motorsteuerung 5 in Abhängigkeit von dem Alterungszustand des NOₓ-Speicherkatalysators 3 erzeugt wird. Falls keine derartige Anforderung zur Desulfatisierung des NOₓ-Speicherkatalysators 3 vorliegt, so wird das Verfahren beendet.

Anderenfalls wird dagegen zum Zeitpunkt t=t₁ eine überstöchiometrische Betriebsphase T_{MAGER} der Brennkraftmaschine 1 eingeleitet, in der das Luftverhältnis λ im Abgas der Brennkraftmaschine 1 beispielsweise λ=1,1 beträgt, so dass die Brennkraftmaschine 1 mit einem mageren Gemisch betrieben wird.

Während dieser überstöchiometrischen Betriebsphase T_{MAGER} des Dreiwegekatalysators 2 zwischen t=t₁ und t=t₃ beginnt zunächst eine Heizphase T_{HEIZ} zwischen t=t₁ und t=t₂, in der sich der Dreiwegekatalysator 2 aufheizt. Diese Aufheizung des Dreiwegekatalysators 2 wird dadurch verursacht, dass der in dem Dreiwegekatalysator 2 gespeicherte Kohlenwasserstoffe mit dem Luftüberschuss exotherm reagiert.

Die Heizphase T_{HEIZ} dauert jedoch nur solange an, bis das Speichervermögen des Dreiwegekatalysators 2 erschöpft und die zuvor in den Dreiwegekatalysator 2 eingespeicherten Kohlenwasserstoffe exotherm verbrannt ist. Es ist jedoch für die erfindungsgemäße Funktion sinnvoll, dass die überstöchiometrische Betriebsphase T_{MAGER} des Dreiwegekatalysators 2 anschließend noch fortgesetzt wird, um dem Dreiwegekatalysator 2 während einer Kühlphase T_{KÜHL} zwischen t=t₂ und t=t₃ die Möglichkeit zur Abkühlung zu geben.

Die Erschöpfung des Speichervermögens des Dreiwegekatalysators 2 zum Zeitpunkt t=t₂ ist an einem Sauerstoffdurchschlag zwischen dem Dreiwegekatalysator 2 und dem NOₓ-Speicherkatalysator 3 erkennbar, wie aus Figur 2b im Zeitpunkt t=t₂ ersichtlich ist. Zur Erkennung eines derartigen Sauerstoffdurchschlags wird deshalb von der Abgassonde 4 laufend die Sauerstoffkonzentration im Abgas der Brennkraftmaschine 1 im Abgaskanal zwischen dem Dreiwegekatalysators 2 und dem NOₓ-Speicherkatalysator 3 gemessen, um einen Sauerstoffdurchschlag des Dreiwegekatalysators 2 erkennen zu können.

Nach dem Sauerstoffdurchschlag zum Zeitpunkt t=t₂ wird die überstöchiometrische Betriebsphase T_{MAGER} mit einem mageren Gemisch der Brennkraftmaschine 1 noch für eine vorgegebene Kühlphase T_{KÜHL}, beibehalten, um den Dreiwegekatalysator 2 zu kühlen. Darüber hinaus erfolgt während der Kühlphase T_{KÜHL} auch die Einspeicherung von Sauerstoff in den Dreiwegekatalysator 2. Die Dauer der Kühlphase T_{KÜHL} wird hierbei in Abhängigkeit von dem aktuellen Betriebspunkt der Brennkraftmaschine 1 aus einem Kennfeld ausgelesen.

Nach Ablauf der Kühlphase T_{KÜHL} zum Zeitpunkt t=t₃ wird dann die überstöchiometrische Betriebsphase T_{MAGER} beendet und zu der unterstöchiometrischen Betriebsphase T_{FETT} zwischen t=t₃ und t=t₅ übergegangen, wobei die unterstöchiometrische Betriebsphase in dem Flussdiagramm in Figur 3a dargestellt ist.

Ein Übergang von der überstöchiometrischen Betriebsphase T_{MAGER} zu der unterstöchiometrischen Betriebsphase T_{FETT} erfolgt jedoch unabhängig von dem Ablauf der Kühlphase T_{KÜHL} auch dann, wenn die Messung der Sauerstoffkonzentration durch die Abgassonde 8 ergibt, dass ein Durchschlag des NOₓ-Speicherkatalysators 3 vorliegt, weil das O₂-Speichervermögen des NOₓ-Speicherkatalysators 3 erschöpft ist. Im Rahmen des erfindungsgemäßen Verfahrens wird deshalb auch die Abgaszusammensetzung stromabwärts dem NOₓ-Speicherkatalysator 3 gemessen, um die überstöchiometrische Betriebsphase bei einem Durchschlag des NOₓ-Speicherkatalysators gegebenenfalls vorzeitig abbrechen zu können. Ein derartiger vorzeitiger Abbruch der überstöchiometrischen Betriebsphase T_{MAGER} bei einem Durchschlag des NOₓ-Speicherkatalysators 3 ist sinnvoll, da der NOₓ-Speicherkatalysator 3 bei einer Fortsetzung des überstöchiometrischen Betriebs nach einem Sauerstoffdurchschlag nicht weiter aufgeheizt wird.

Im folgenden wird nun anhand des Flussdiagramms in Figur 3b die unterstöchiometrische Betriebsphase T_{FETT} zwischen t=t₃ und t=t₅ beschrieben.

So wird die Brennkraftmaschine 1 zum Zeitpunkt t=t₃ von der elektronischen Motorsteuerung mit einer Luftzahl beispielsweise λ=0,8 angesteuert, was zu einer fetten Gemischzusammensetzung führt.

Zu Beginn der unterstöchiometrischen Betriebsphase T_{FETT} wird der Dreiwegekatalysator 2 zunächst während einer Heizphase T_{HEIZ} zwischen t=t₃ und t=t₄ aufgeheizt. Diese Aufheizung des Dreiwegekatalysators 2 wird dadurch verursacht, dass der zuvor eingespeicherte Sauerstoff mit dem Kraftstoffüberschuss exotherm reagiert.

Die Aufheizung des Dreiwegekatalysators 2 dauert jedoch nur solange an, bis das Sauerstoffspeichervermögen des Dreiwegekatalysators 2 zum Zeitpunkt t=t₄ ausgeschöpft ist. Es ist jedoch für die erfindungsgemäße Funktion sinnvoll, dass die unterstöchiometrische Betriebsphase T_{FETT} über diesen Zeitpunkt hinaus fortgesetzt wird, damit der Dreiwegekatalysator 2 während der anschließenden Kühlphase T_{KÜHL} zwischen t=t₄ und t=t₅ genügend Zeit zum Abkühlen hat. Darüber hinaus wird während der Kühlphase T_{KÜHL} zwischen t=t₄ und t=t₅ Kraftstoff in den Dreiwegekatalysator 2 eingespeichert, der während der nächsten Heizphase T_{HEIZ} exotherm verbrannt wird.

Während der unterstöchiometrischen Betriebsphase T_{FETT} zwischen t=t₃ und t=t₅ wird deshalb von der Abgassonde 4 laufend die Sauerstoffkonzentration zwischen dem Dreiwegekatalysator 2 und dem NOₓ-Speicherkatalysator 3 gemessen, um einen Durchschlag des Dreiwegekatalysators 2 erkennen zu können.

Nach einem derartigen Durchschlag des Dreiwegekatalysators 2 während der unterstöchiometrischen Betriebsphase T_{FETT} zum Zeitpunkt t=t₄ wird die unterstöchiometrische Betriebsphase T_{FETT} noch für eine vorgehende Kühlphase T_{KÜHL} bis zum Zeitpunkt t=t₅ fortgesetzt, wobei die Kühlphase T_{KÜHL} in Abhängigkeit von dem aktuellen Betriebspunkt der Brennkraftmaschine 1 beispielsweise aus einem Kennfeld ausgelesen wird. Nach Ablauf der vorgegebenen Kühlphase T_{KÜHL} zum Zeitpunkt t=t₅ wird dann die unterstöchiometrische Betriebsphase T_{FETT} beendet.

Darüber hinaus wird die unterstöchiometrische Betriebsphase T_{FETT} auch dann beendet, wenn der NOₓ-Speicherkatalysator 3 während der unterstöchiometrischen Betriebsphase T_{FETT} durchschlägt. Zur Erkennung eines Durchschlags wird von der Abgassonde 8 laufend die Abgaszusammensetzung stromabwärts nach dem NOₓ-Speicherkatalysator 3 gemessen. Falls diese Messung einen Durchschlag des NOₓ-Speicherkatalysators 3 anzeigt, so wird die unterstöchiometrische Betriebsphase T_{FETT} bereits vor dem Zeitpunkt t=t₅ vorzeitig abgebrochen. Dieser vorzeitige Abbruch der unterstöchiometrischen Betriebsphase T_{FETT} bei einem Durchschlag des NOₓ-Speicherkatalysators 3 ist sinnvoll, da der NOₓ-Speicherkatalysator 3 nach einem Durchschlag aufgrund einer Erschöpfung seines Speichervermögens nicht weiter aufgeheizt wird.

Die Kühlung des Dreiwegekatalysators 2 während der Kühlphase T_{KÜHL} zwischen t=t₄ und t=t₅ verhindert, dass der Dreiwegekatalysator 2 während der Aufheizung in den Heizphasen T_{HEIZ} zwischen t=t₁ und t=t₂ sowie zwischen t=t₃ und t=t₄ über seine maximal zulässige Betriebstemperatur hinaus aufgeheizt wird, obwohl der NOₓ-Speicherkatalysator 3 dann bis auf die Desulfatisierungstemperatur von rund 700° Celsius aufgeheizt wird.

Aus einem Vergleich der beiden Zeitdiagramme in den Figuren 2a und 2b ist ersichtlich, dass die über- bzw. unterstöchiometrischen Betriebsphasen des Dreiwegekatalysators 2 gegenüber den entsprechenden über- bzw. unterstöchiometrischen Betriebsphasen des NOₓ-Speicherkatalysators 3 phasenverschoben sind.

So beginnt die überstöchiometrisches Betriebsphase T_{MAGER} des NOₓ-Speicherkatalysators 3 erst zum Zeitpunkt t=t₂, also bei einem Durchschlag des Dreiwegekatalysators 2.

Entsprechend beginnt auch die unterstöchiometrische Betriebsphase T_{FETT} des NOₓ-Speicherkatalysators 3 erst zum Zeitpunkt t₄ bei einem Durchschlag des Dreiwegekatalysators 2.

Somit führt der dauernde Wechsel zwischen unter- und überstöchiometrischen Betriebsphasen also zu einer unterbrechungsfreien Aufheizung des NOₓ-Speicherkatalysators 3, während der Dreiwegekatalysator 2 nur beim jedem Übergang zwischen über- und unterstöchiometrischen Betriebsphasen jeweils während der Heizphasen T_{HEIZ} kurzfristig aufgeheizt wird und ansonsten während der folgenden Kühlphasen T_{KÜHL} wieder abkühlen kann. Auf diese Weise wird vorteilhaft eine starke Erhitzung des NOₓ-Speicherkatalysators ermöglicht, ohne dass der Dreiwegekatalysator 2 überhitzt wird.

Die Erfindung ist nicht auf das vorstehend beschriebene Ausführungsbeispiel der Erfindung beschränkt. Vielmehr ist eine Vielzahl von Varianten und Abwandlungen möglich, die ebenfalls von dem Erfindungsgedanken Gebrauch machen und deshalb in den Schutzbereich fallen.

## Patentansprüche

1. Betriebsverfahren für eine Brennkraftmaschine (1) mit einem Vorkatalysator (2) und einem Speicherkatalysator (3), wobei die Gemischzusammensetzung der Brennkraftmaschine (1) während einer unterstöchiometrischen Betriebsphase (T_{FETT}) angefettet wird, um die Temperatur des Speicherkatalysators (3) zu erhöhen und den Speicherkatalysator (3) dadurch zu regenerieren,
**dadurch gekennzeichnet,**
**dass** die Gemischzusammensetzung der Brennkraftmaschine (1) vor der unterstöchiometrischen Betriebsphase (T_{FETT}) während einer überstöchiometrischen Betriebsphase (T_{MAGER}) abgemagert wird.

2. Betriebsverfahren nach Anspruch 1,
**dadurch gekennzeichnet,**
**dass** die unterstöchiometrische Betriebsphase (T_{FETT}) und die überstöchiometrische Betriebsphase (T_{MAGER}) während eines Regenerationsbetriebs zur Regeneration des Speicherkatalysators (3) zyklisch abwechselnd wiederholt werden.

3. Betriebsverfahren nach Anspruch 1 oder Anspruch 2,
**dadurch gekennzeichnet,**
**dass** während der überstöchiometrischen Betriebsphase (T_{MAGER}) und/oder während der unterstöchiometrischen Betriebsphase (T_{FETT}) die Sauerstoffkonzentration im Abgas der Brennkraftmaschine (1) gemessen wird, um einen Durchschlag des Vorkatalysators (2) zu erkennen, wobei der Übergang von der überstöchiometrischen Betriebsphase (T_{MAGER}) zu der unterstöchiometrischen Betriebsphase (T_{FETT}) oder umgekehrt frühestens nach einem Durchschlag des Vorkatalysators (2) erfolgt.

4. Betriebsverfahren nach Anspruch 3,
**dadurch gekennzeichnet,**
**dass** die Sauerstoffkonzentration zwischen dem Vorkatalysator (2) und dem Speicherkatalysator (3) gemessen wird.

5. Betriebsverfahren nach Anspruch 3,
**dadurch gekennzeichnet,**
**dass** die Sauerstoffkonzentration vor dem Vorkatalysator (2) gemessen wird, wobei aus der gemessenen Sauerstoffkonzentration der Sauerstofffüllungsgrad des Vorkatalysators (2) abgeleitet wird, um einen Durchschlag des Vorkatalysators (2) zu erkennen.

6. Betriebsverfahren nach mindestens einem der Ansprüche 3 bis 5,
**dadurch gekennzeichnet,**
**dass** die überstöchiometrische Betriebsphase (T_{MAGER}) nach einem Durchschlag des Vorkatalysators (2) für eine vorgegebene Kühlphase (T_{KÜHL}) fortgesetzt wird, um eine Überhitzung des Vorkatalysators (2) zu vermeiden.

7. Betriebsverfahren nach Anspruch 6,
**dadurch gekennzeichnet,**
**dass** die Dauer der Kühlphase (T_{KÜHL}) in Abhängigkeit von dem Betriebspunkt der Brennkraftmaschine (1) festgelegt wird.

8. Betriebsverfahren nach mindestens einem der vorhergehenden Ansprüche,
**dadurch gekennzeichnet,**
**dass** die Sauerstoffkonzentration im Abgas der Brennkraftmaschine (1) stromabwärts nach dem Speicherkatalysator (3) gemessen wird, um einen Durchschlag des Speicherkatalysators (3) zu erkennen, wobei die unterstöchiometrische Betriebsphase (T_{FETT}) und/oder die überstöchiometrische Betriebsphase (T_{MAGER}) bei einem Durchschlag des Speicherkatalysators (3) beendet wird.

9. Betriebsverfahren nach mindestens einem der vorhergehenden Ansprüche,
**dadurch gekennzeichnet,**
**dass** die Temperatur des Speicherkatalysators (3) mindestens bis auf die Desulfatisierungstemperatur des Speicherkatalysators (3) angehoben wird.
